Europäisches Patentamt

European Patent Office

Office européen des brevets

(11) Publication number: **0 030 671**
**A1**

## (12) EUROPEAN PATENT APPLICATION

(21) Application number: **80107503.7**

(22) Date of filing: **01.12.80**

(51) Int. Cl.³: **G 02 B 27/00**
**H 01 S 3/00**

(30) Priority: **17.12.79 US 104186**
**12.12.79 US 104186**

(43) Date of publication of application:
**24.06.81 Bulletin 81/25**

(84) Designated Contracting States:
**DE**

(71) Applicant: **Payton, Raymus K.**
**P.O. Box 1513**
**Newport Beach California 92663(US)**

(72) Inventor: **Lang, Paul Wentworth**
**P.O. Box 1000**
**Orange, CA 92666(US)**

(74) Representative: **Jaeger, Klaus, Dr. rer. nat. et al,**
**JAEGER, GRAMS & PONTANI Patentanwälte**
**Bergstrasse 48 1/2**
**D-8035 München-Gauting(DE)**

(54) Method and apparatus for convecg sequentially produced light into output light comprised of periodic high amplitude pulses.

(57) A steady light beam such as continuous wave, constant amplitude coherent light as provided by a laser (10), is moved through a given acute angle ($\alpha$) at a given frequency. The light beam is passed into a solid body (17) of light transmissive material while moving through the given acute angle ($\alpha$) such that the initially received light in the body when the beam starts its movement through the acute angle follows a first path (25) of a first given length before it emerges from the body. Subsequently received light in the body when the beam has completed its movement through the acute angle ($\alpha$), in turn, follows a second path (27) of a second given length different from the first given length before it emerges from the body (17). The referred-to frequency is adjusted to define a time increment for the beam to move through the referred to given acute angle ($\alpha$). This time increment is made substantially equal to the time it takes light to travel a path length in the body equal to the difference in the referred to first and second given lengths. With such an arrangement, the light beams entering the body at the extremes of the acute angle ($\alpha$) will exit or emerge from the body (17) coincidentally in time thereby resulting in a high amplitude pulse. These high amplitude pulses are generated at the frequency of movement of the beam through the referred to acute angle. A similar effect is achieved using a plurality of individual pulse lasers arranged to be successively triggered at predetermined time intervals. The solid light transmissive body (17) receives the output pulses from the lasers at different input angles so that the respective pulses follow different path lengths in the body. The sequence of firing of the lasers and the respectively angles are such that pulses exiting from the body will all exit substantially simultaneously. The result is a high energy concentration of output light.

COMPLETE DOCUMENT

./...

FIG.1

SPECIFICATION

This invention relates generally to optics and more particularly to a method and apparatus for converting steady light into output light comprised of periodic high amplitude pulses.

BACKGROUND OF THE INVENTION

United States patent 3,459,466 issued to J.A. Giordmaine on August 5, 1969 and assigned to The Bell Telephone Laboratories, describes an optical beam peak power amplifier and buncher. Essentially, this patent teaches the concept of breaking up a light beam into spatially separated portions and thence subjecting the spatially separated portions to different delay times so that the same can be reassembled to all occur at a single moment in time. In United States patent 3,684,346 issued August 15, 1972 there is described an optical integrating system which accomplishes an integration of spatially and time separated light pulses into a single large pulse of light by utilizing delay techniques, and
in this respect, the basic principle of "bunching" is the
same as disclosed in the first-mentioned Giordmaine patent.
However, in later U.S. Patent 3,684,346, a unique delay
arrangement utilizing fiber optics is disclosed in combination
with a special reflective crystal capable of generating
progressively increasing annular rings of light. This arrangement
and special reflective crystal was not known prior to the
publication of the referred to patent and constitutes a
specific improvement on the basic concepts involved.

Notwithstanding the particular system already
known and as set forth in the above referred to United States
Patent 3,684,346, there still exists a need to provide a
more practical type of time delay means for realizing the desired end of generating high amplitude pulses of light so that fully practical systems can be developed and utilized.

## BRIEF DESCRIPTION OF THE PRESENT INVENTION

With the foregoing in mind, I have now discovered a further improved method and apparatus for a "light bunching system" for converting steady light and time sequenced pulsed light into output light comprised of periodic high amplitude bursts of light energy pulses. Basically, this new method and apparatus constitutes an improvement over the above-mentioned prior United States patents.

Briefly, in accord with one method of implementation of this invention, a steady light beam is moved through a given acute angle at a given frequency. The light beam is passed into a solid body of light transmissive material while moving through the given acute angle such that the initially received light in the body when the beam starts its movement through the acute angle follows a first path of a first given length before it emerges from the body. Subsequently received light in the body when the beam has completed its movement through the acute angle, follows a second path of a second given length different from the first given length before it emerges from the body. The value of the given frequency of movement of the light beam through the given acute angle is adjusted such that the time increment for the beam to move through the given acute angle is substantially equal to the time it takes light to travel a path length in the body equal to the difference in the first and second given lengths. With this arrangement, the initial entering light beam emerges from the body at the same time that the subsequently received light beam emerges from the body thus resulting in a high amplitude pulse.

The desired beam delay and resultant conversion of steady light into high amplitude periodic pulses is thus accomplished by simply introducing a rapidly moving steady light beam into a single integral body of light transmissive material, careful control of the manner of moving the beam and of the geometry of the body providing the desired results.

In an alternative embodiment and method of implementation of the invention a plurality of pulse type lasers are oriented to direct their output pulses into the light transmissive body at different angles. Appropriate trigger and delay means are provided for successively firing the lasers to result in successive pulses traveling different path lengths into the light transmissive body. Because the paths differ in length, and because the first fired laser follows the longest path, the respective pulses can be caused to exit from the body substantially simultaneously.

In the preferred embodiment, the light transmissive body is elongated with a longitudinal axis and has side surfaces from which internal light reflections can take place, the light beam entrance area being on a side surface at one end of the body and a light exit area being on a side surface at the opposite end of the body. The number of the side surfaces is such that the light beams are internally reflected therefrom and will each travel in the manner of a helical path about the said longitudinal axis. The pitch of this helical path increases as the angle of the beam axis with its initial axis approaches said given acute angle.

BRIEF DESCRIPTION OF THE DRAWINGS

A better understanding of this invention will be had by now referring to the accompanying drawings in which:

FIG. 1 is a highly diagramatic perspective view of the basic components of one preferred apparatus for carrying out one aspect of the method of this invention;

FIG. 2 is a top plan view of the basic components looking in the direction of the arrows 2-2 of FIG. 1;

FIG. 3 illustrates a series of qualitative wave forms useful in explaining basic principles of operation of the invention;

FIG. 4 is a highly schematic perspective view of a multiple pulse laser assembly constituting an alternative preferred embodiment of the present invention;

FIG. 5 is a top plan view of one of the components of the system lookin in the direction of the arrows 5-5 of FIG. 4;

FIG. 6 is a schematic view of another embodiment of the multiple pulse laser assembly of the invention;

FIG. 7 is a front view of one of the components looking in the direction of the arrows 7-7 of FIG. 6;

FIG. 8 is a diagrammatic perspective view of yet another embodiment of the multiple pulse laser assembly of the invention; and,

FIG. 9 comprises a series of time graphs useful in explaining the operation of the multiple pulse laser arrangement of the invention.

## DETAILED DESCRIPTION OF THE EMBODIMENTS

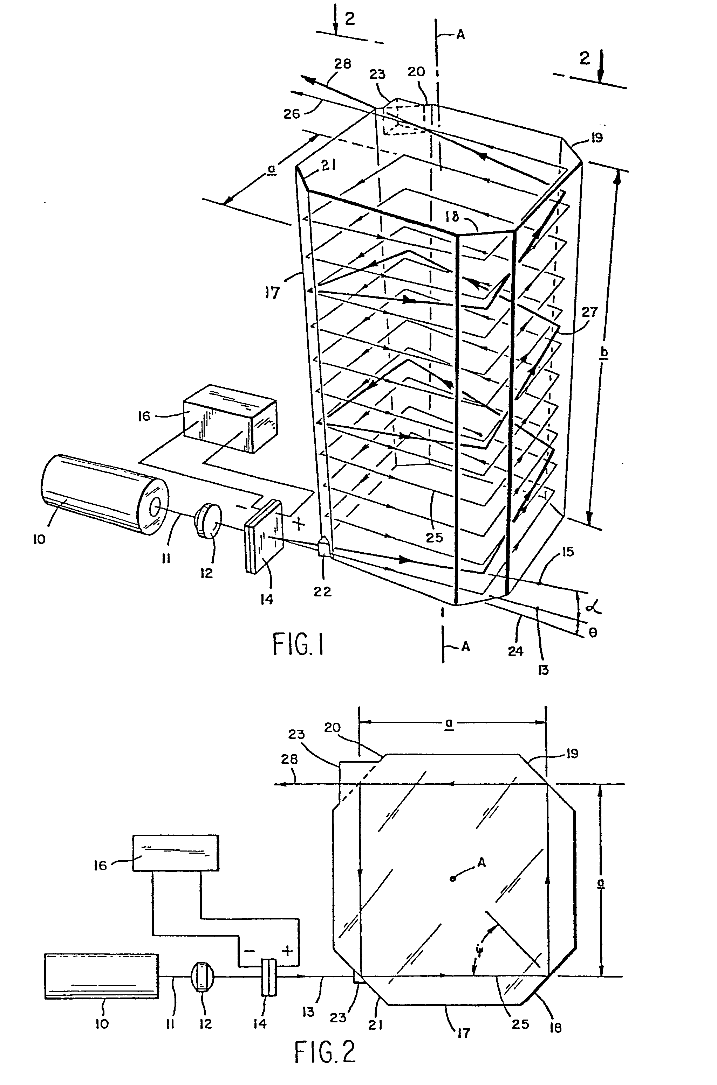

Referring first to the lower left portion of FIG. 1, there is shown a continuous wave laser 10 generating a steady light beam 11 of constant amplitude coherent light. A collimating lens system 12 may be provided in front of the laser to collimate the beam 11 along an initial axis 13. While normally a laser beam exhibits very little divergence, the use of the collimating lens 12 will minimize any spread in the beam axis as the laser light travels along an extended path.

In accord with a first feature of the present invention there is provided a means for moving the laser beam through a given acute angle. In the particular embodiment of FIG. 1, this means takes the form of an electro-optical crystal 14 through which the beam 11 passes. Crystal 14 when subjected to an electrical voltage will move the beam 11 from its initial axis 13 to a new axis 15. An appropriate electrical signal can effect such movement periodically and is provided in FIG. 1 by an appropriate oscillator 16. The frequency of the electrical signal from the oscillator 16 constitutes a given frequency defining a given time increment for the laser beam 11 to move from its initial axis 13 to its new axis 15. The significance of this time increment will become clearer as the description proceeds. In FIG. 1, the given acute angle through which the beam is moved is indicated by the Greek letter alpha.

Cooperating with the moving light beam as illustrated in the main portion of FIG. 1, is an elongated solid body 17 of light transmissive material such as glass. Body 17 has a longitudinal axis A-A running in a vertical direction as oriented in FIG. 1. A cross section normal to the axis A-A takes the shape of a polygon having at least four sides. In the specific embodiment illustrated, the cross section has eight sides but only four of these sides define side surfaces which are actually utilized so that, in effect, the body illustrated could have a simple square cross section.

The significant four sides in FIG. 1 are designated 18, 19, 20 and 21. These side surfaces are high polished and lie in planes at 90° to each other as illustrated.

Body 17 defines light entrance and light exit areas adjacent to its opposite ends respectively. In the example shown in FIG. 1, these light entrance and light exit areas are defined by a light entrance 45° prism 22 and a light exit 45° prism 23 affixed to portions of the sides 21 and 20 respectively adjacent to the opposite ends of the body 17.

It will be noted that the light entrance prism 22 is substantially smaller than the light exist prism 23 and the reason for this difference in size will become clearer as the description proceeds. The prisms 22 and 23 may be integrally formed with the glass body 17 or alternatively cemented to the side surfaces. It is preferable, however, that the prisms simply be an integral portion of the glass body so as to minimize any light losses across the interface of the prism and body.

The face of the prism 22 is positioned to intercept the collimated output beam from the crystal 14 over its degree of movement as defined by the given acute angle alpha, heretofore described. The initial axis 13 of the beam is directed to form an acute angle theta with a plane normal to the longitudinal axis A-A of the body 17, this plane being schematically indicated by the line 24. The angle theta is just made sufficient to result in the light beam along the initial axis 13, after being internally reflected from the surfaces of the sides 18, 19, and 20 being at a level to clear the light entrance prism 22 so that the beam will continue to be internally reflected from the surfaces of the sides to progress about the axis A-A in the manner of a helix until it reaches the light exit prism 23 from whence it emerges from the body. The helical path followed by this initially received light beam is indicated by the numeral 25 and its output from the exit prism 23 is shown at 26.

As the angle between the beam and its initial axis 13 approaches the given acute angle alpha, the pitch of the helical path will increase.

Thus, still referring to FIG. 1, when a subsequent light beam entering the body corresponding to the beam when it has completed its movement through the given acute angle alpha; that is, when the beam is traveling along its new axis 15, there will be substantially fewer helical turns because of the change in the angle prior to exiting of the light beam from the exit prism 23. These fewer turns are indicated by the heavier path line 27 in FIG. 1. The exiting light corresponding to the beam entering the body along its new axis 15 is designated 28 in FIG. 1.

If the length of the helical path 25 between the entrance prism 22 and exit prism 23 defines a first given length and the length of the helical path 27 between the entrance prism 22 and exit prism 23 defines a second given length, it is possible to adjust the frequency of the beam movement through the acute angle such that the time increment for the beam to travel from its initial axis 13 to its new axis 15 is precisely equal to the time for light to travel a path in the body equal to the difference in the first
and second path lengths.

Because of limitations in frequency adjustments,
it should be understood that a high refractive index material
for the body 17 can be selected and the dimensioning of
the body appropriately adjusted to provide helical path
lengths different by an amount such that the time for light
to travel said amount in the body 17 is equal to the time
for the beam to pass through the given acute angle.

Provided the foregoing conditions are met, then
there will be a coincidence of the light exiting from the
exit prism 23 resulting from light entering the entrance
prism along the initial axis 13 and light entering the entrance
prism along the new axis 15.  The exiting light occuring
in time coincidence will thus represent a high amplitude
light pulse.  In other words, this high amplitude light
pulse encompasses all of the light emitted between the time
that the light beam initially is directed along the axis
13 and the time the light beam reaches the new axis 15.
Further, it will be clear that these high amplitude light
pulses will occur at precisely the frequency of the signal
applied to the electro-optical crystal 14 from the oscillator
16.

Referring now to FIG. 2, for the particular embodiment
disclosed in FIG. 1 wherein four internally reflecting surfaces

- 12 -

0030671

are provided oriented at 90° to each other surrounding the
longitudinal axis A-A, the resulting helical path will appear
as a square when viewed along the axis A-A. The angle of
incidence    of the incoming beam such as indicated by
the path 25 internally reflected from the surface 18 will
be 45°. This angle is well above the critical angle for
total internal reflection when a glass body having a refractive
index of the order of 1.6 is utilized. For such refractive
index, the critical angle is approximately 38°. Accordingly,
it will be clear that all of the light is held wholly within
the body while effecting the various circuits making up
the helical path until such time as the light reaches the
exist prism 23.

It is to be appreciated that by introducing the
light beam adjacent to the lower end portion of the body
in the manner described so as to cause it to follow a helical
path about the longitudinal axis, the path length of travel
of the light in the body can be made substantially greater
than any one of the basic dimensions of the body; that is,
the length, width or height of the body. Thus, if a represents
the side of the square helical path 25 as indicated clearly
in FIG. 2, and if b represents a number of circuits or helical
turns of the path between opposite ends of the body 17,
the total path length will be approximately 4ab-a, the "-a"
term taking into account the missing path length between
surfaces 20 and 21 of the last or topmost circuit.

As mentioned heretofore, the light beam 11 is collimated by the collimating lens 12 to minimize divergence of the beam. Notwithstanding the use of such collimation, there will still be some beam divergence. Nevertheless, there will still be some slight unavoidable spread of the laser light beam particularly when traveling over a fairly long path. It is for this reason that the exiting prism 23 is made larger than the entrance prism 22. The larger exiting prism 23 will accomodate the spread in the light to assure that all light resulting from sweeping of the beam through the angle alpha exits from the body. Since the time increment for the laser beam to move between its initial axis 13 through the angle alpha to its new axis 15 is made equal to the time it takes light to travel in the body 17 a distance corresponding to the difference of the lengths of the paths 25 and 27, it will be evident that as the beam moves from its initial axis 13 towards its new axis 15, the injected light beam into the body will more or less continuously be meeting the immediately preceding injected beam so that the high amplitude pulse builds up until it finally exits at the prism 23 in one "bunched" energy pattern. After such high amplitude pulse has exited from the body, the beam is returned to its initial axis and again swept through the angle alpha. However, in order to utilize the maximum amount of available steady light in forming the high amplitude pulses, it is desirable to excite the crystal 14 with an assymmetrical waveform so that essentially the return of the beam form its new axis 15 to its initial axis 13 takes place at a far greater rate than the rate of movement of the beam from its initial axis 13 to its new axis 15. By providing such an assymmetrical waveform to the crystal 14, more than 50% of the steady light emitted during any given period defined by the given frequency of the oscillator 16 will be utilized in making each high amplitude pulse.

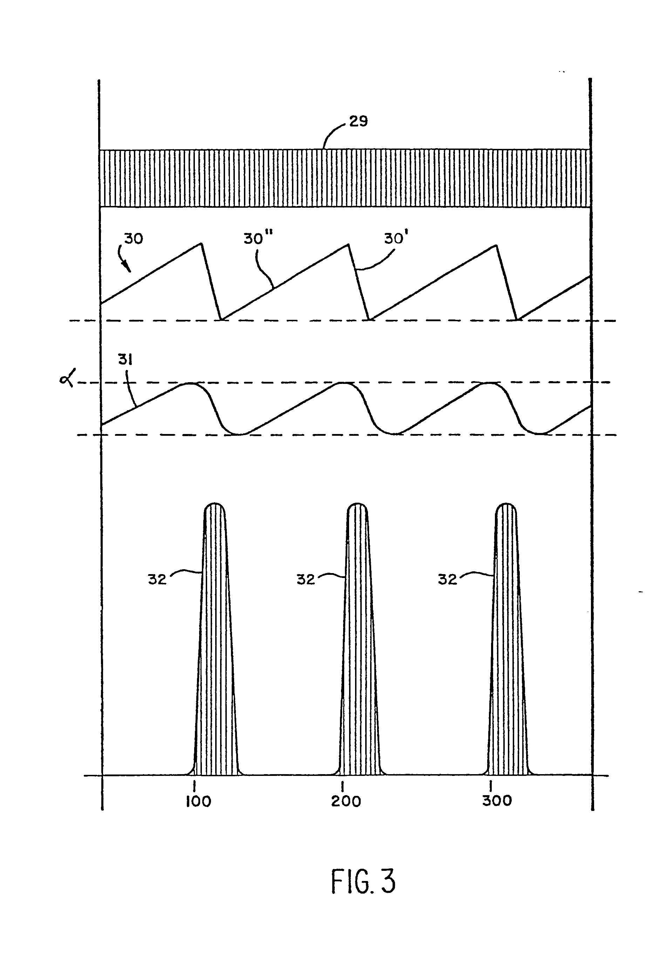

All of the foregoing will become clearer by now referring to FIG. 3 which qualitatively depicts the time plot of the assymmetrical waveforms in a manner in which the steady light is thereby converted to high amplitude pulses.

Referring specifically to FIG. 3, there is shown at the top by the waveform 29 the constant amplitude coherent steady light emitted from the laser 10 described in FIGS. 1 and 2.

Below the steady light waveform 29 is shown the electrical waveform output from the oscillator 16 of FIGS. 1 and 2 wherein the same is an assymmetrical sawtooth shape designated generally by the numeral 30. This sawtooth shape results from moving the light beam 11 from its initial axis through the acute angle alpha to its new axis and repeating the moving of the beam 11 to the new axis 15, thence returning the beam 11 to its initial axis 13 and repeating the movement
of the beam to the new axis 15 and back to its initial axis
13 at a given frequency. As the signal 30 increases in
magnitude in an upward or positive direction, the angle
between the output beam from the crystal 14 from its initial
axis 13 similarly increases as it approaches its new axis
15. When the sawtooth waveform reaches its maximum value
an returns to its initial starting point, the output beam
from the crystal 14 is similarly caused to move from its
new axis back to its initial axis.

The assymmetrical sawtooth waveform 30 as shown
in FIG. 3 has a steeper slope indicated at 30' when moving
from its maximum value to its initial value than its slope
30'' between its initial value and maximum value and, as
pointed out heretofore, this situation is desirable to effect
movement of the laser beam in a similar manner.

Below the waveform 30 of FIG. 3 is depicted at
31 a plot of the angle alpha as a function of time and it
will be noted that the angle alpha increases as the waveform
30 increases and decreases or returns at a much higher rate,
also corresponding to the return of the waveform.

Below the light beam angle plot 31 there are shown
high amplitude pulses 32 representing the accumulation of
the light over the time increment when the light beam moves
between its initial axis 13 and new axis 15 all as described heretofore.

In the particular example depicted in FIG. 3, the frequency of the waveform and thus the frequency of movement of the light beam through the given angle alpha is ten megacycles/sec. The period between the generation of the high amplitude pulses 32 is thus 100 nano seconds. Accordingly, the difference of the lengths of the helical paths 25 and 27 described in FIG. 1 should constitute a path length for which it will take light approximately 100 nano seconds to travel within the body 17.

If the body 17 comprises glass having a refractive index of 1.622, the speed of light in the glass will be $1.875 \times 10^{10}$ centimeters/second. Therefore, the light will travel a path length of 1875 cm in 100 nano seconds.

With reference to the specific example illustrated in FIG. 1, the total path length for the path 25 is approximately 46$\underline{a}$ cos  , there being provided 12 helical turns for the path 25 each helical turn or circuit having four "a's", except for the last helical turn which only has three "a's".

The total path length for the path 27, on the other hand, is only equal to 11$\underline{a}$/cos ( $\theta$ + ).

The difference between the path lengths 25 and 27 is thus 47$\underline{a}$/cos$\theta$ −11a/cos ($\theta$+) which is approximately

36a.

If the path length 1875 cm is divided by 36, there results the necessary dimension for a in centimeters which comes to approximately 52 cm or about 20.5 inches.

Thus, even for the simple illustrative example shown in FIG. 1, the sides of the body 17 would be less than two feet on a side.

In an actual embodiment, however, the path length 25 would be made up of a far greater number of helical turns than depicted. The relatively small number of 12 turns shown in FIG. 1 is utilized simply to avoid confusion in the drawing.

For example, if four times as many turns are used than shown, the difference in the path lengths would be approximately 180a rather than 36a and the dimension a would then be approximately 10.4 cm or 4.1 inches.

A glass body having a side dimension of approximately five or six inches is entirely feasible and can easily be accomodated within a relatively confined area.

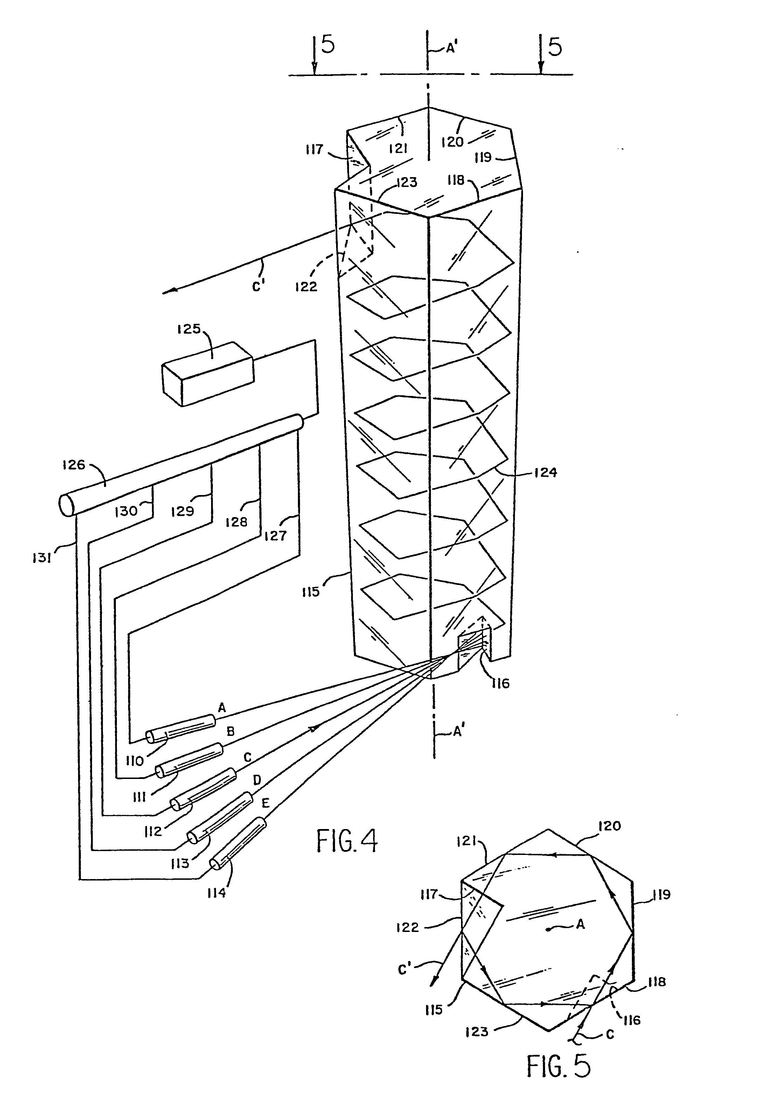

The invention can also be achieved through the use of multiple lasers which are repulsed sequentially. Referring first to FIG. 4, there is shown a plurality of pulse lasers 110, 111, 112, 113 and 114, each capable of generating a giant pulse of coherent light in response to a trigger signal received thereby. In FIG. 4, the respective light pulses are indicated by the letters A, B, C, D, and E. An example of a giant pulse laser is a solid state laser wherein the Q of the optical cavity is maintained in a "spoiled" condition until an abnormally large inverted population level is established by pumping of the laser. By then restoring the optical cavity Q with a trigger signal, a single giant output laser pulse is generated.

Cooperating with the plurality of lasers as shown in FIG. 4 is an elongated body 115 of light transmissive material. Body 115 is provided with a light entrance means in the form of a triangular cut-off 116 at one end of the elongated body 115 and a light exit means again in the form of a triangular cut-out 117 adjacent the opposite end of the body 115.

In the particular embodiment disclosed in FIG. 4, the body 115 takes the form of a glass having a plurality of polished side surfaces 118, 119, 120, 121 and 122 defining a hexagon in cross section; that is, in a section taken normal to the elongated axis designated A'-A' for the body.

With the foregoing arrangement, light pulses from the various lasers are directed into the light entrance means 116 at angles different from each other so that the light paths between the light entrance means 116 and light exit means 117 travelled by the output pulses from the respective lasers are of different lengths.

In FIG. 4, there is shown one such helical light path designated 124 for the laser 112, the input pulse being indicated by the letter C and the output pulse at the end of the helical path 124 being indicated at C'. The angle of the output pulse from the laser 112 determines the pitch of the helical path 124. Similar helical paths will be followed by the giant pulses generated by the other lasers and will have different pitches depending upon the entry angle.

Referring now to the upper left portion of FIG. 4, there is shown a trigger generating means 125 cooperating with a delay line 126. Delay line 126 is connected to the trigger means 125 and is provided with various tap off points 127, 128, 129, 130 and 131 connecting respectively to the successive lasers 110 through 114.

With the foregoing arrangement, the respective lasers/110 through 114 will be successively triggered at predetermined time intervals. The angle of entry of the output pulses from the lasers and these predetermined time intervals are so calculated that the output pulses from the lasers exit from the light exit means 117 in the body substantially simultaneoulsy.

With respect to the foregoing, the operation of the embodiment of FIG. 4 is similar to that of FIGS. 1-3. Rather than sweep a continuous laser beam through a given acute angle, however, in the embodiments of FIG. 4-9, there are provided discrete lasers already oriented to emit laser pulses entering the light transmissive body at discrete angles covering a range similar to the range of angles within the acute angle utilized in the embodiment of FIGS. 1-3.

Thus, the time interval between successive firings of the laser shown in FIG. 1 are essentially defined by the length of time it takes light to travel a path length corresponding to the difference in successive path lengths for the lasers in question. As a consequence, the various successive pulses received at the light entrance means 116 will all exit substantially simultaneously as noted heretofore to provide for a large concentration of light energy.

FIG. 5 shows more clearly the manner in which internal reflections are effected at the various polished surfaces 118 through 123. While six surfaces have been shown defining the hexagon in cross section, more surfaces could be provided if desired or even a lesser number such as four surfaces as shown and described in connection with the embodiment of FIGS. 1-3. However, it is necessary to have a sufficient number of surfaces that the critical angle for total internal reflection is not exceeded as otherwise the light will escape from one of the side surfaces of the body.

By defining the various light paths totally within a solid light transmissive body by means of internal reflections, losses are minimized.

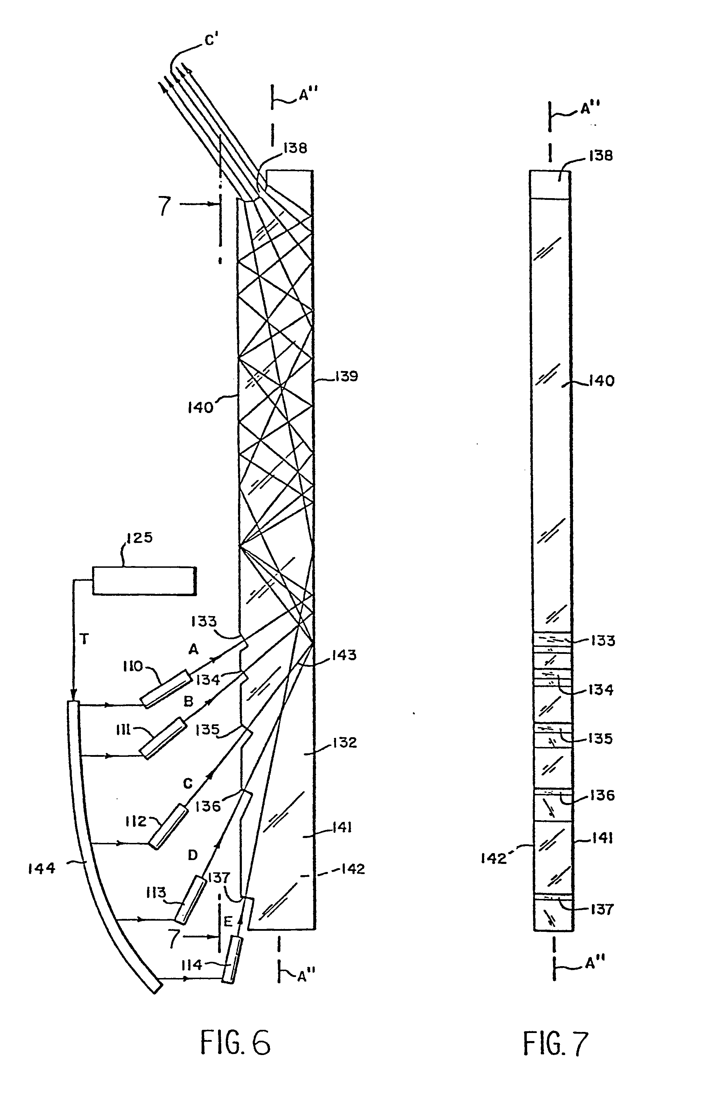

Referring now to FIG. 6, there is shown another embodiment of the invention wherein a plurality of lasers which may be identical to the lasers 110 through 114 are again provided and designated by the same numerals in FIG. 4. In this embodiment, the elongated light transmissive body is designated 132 and includes a light entrance means comprised of a plurality of separate triangular shaped cut-outs such as indicated at 133, 134, 135, 136 and 137 at successively spaced distances from one end of the body. The lasers 110 through 114, in turn, are oriented to direct their output pulses into these respective triangular cut-outs all again at different angles. The arrangement is such that among the various light paths followed by the output pulses, no two paths follow a like direction in the body.

The light exit means for the body 132 in the embodiment of FIG. 6 takes the form of a single continuous curved cut-out 138 positioned to intercept the ends of the various paths in such a manner to direct exiting light in parallel directions.

The body 132 has two opposite parallel side surfaces 139 and 140 between which internal reflections of the various laser light pulses take place. In the example illustrated, two other sides surfaces 111 and 142 complete the perimeter
of the body 132.

For purposes of illustration, there is again designated
an output light pulse by the letter C from the laser 112
entering the light entrance cut-out 135 and following a
path 143 within the body 132. This path is shaped essentially
similar to a sawtooth with multiple internal reflections
taking place at an angle determined by the entrance angle
to the elongated axis of the body.

It will be immediately evident that similar sawtooth
shaped paths but at different internal reflective angles
are defined for the outputs from the other lasers so that
the total path lengths that the respective pulss follow
differ from each other, each crossing the longitudinal axis
A'' -A'' at different angles.

The trigger means 125 of FIG. 4 may be utilized
for the system in FIG. 6. However, there is provided a
different delay line means 144 with appropriate tap off
points to define different time intervals appropriately
calculated such that the output pulses exiting from the
curved lens surface 138 will all exit substantially simultaneously.

In the front view of FIG. 7, the opposite remaining
sides 141 and 142 are seen to be in a spaced parallel relationship
somewhat narrower than the parallel sides 139 and 140 described in FIG. 6.


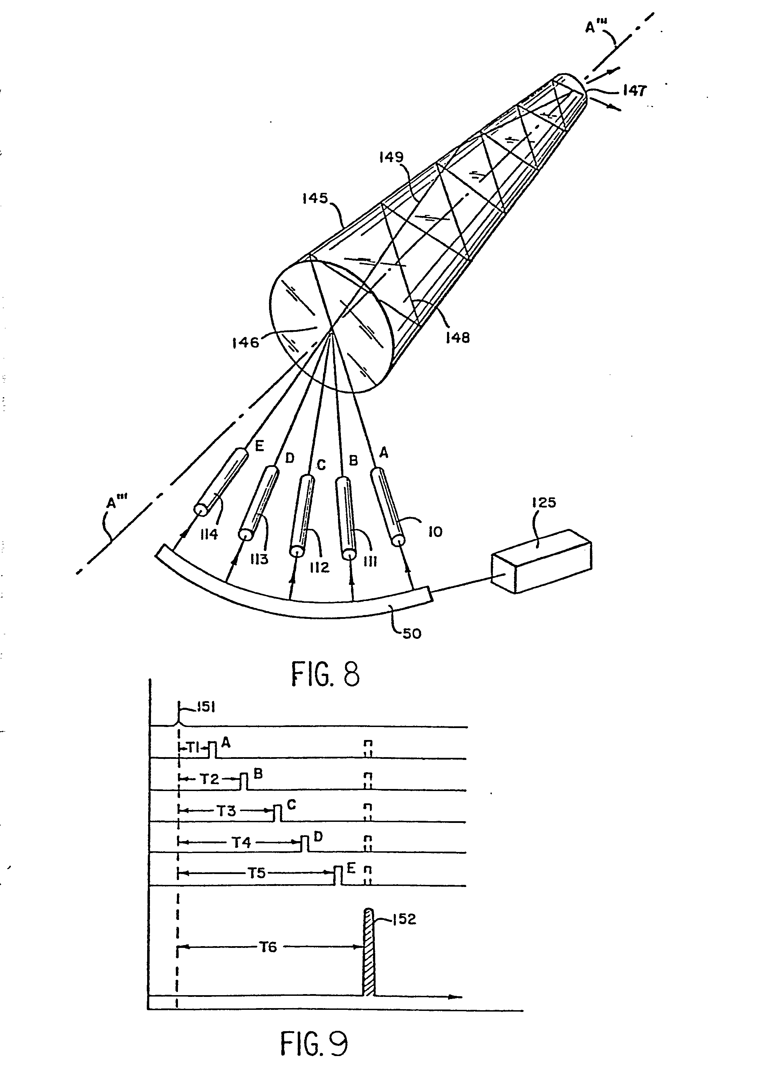

Referring now to FIG. 8, there is shown another
embodiment of the invention employing multiple pulsed lasers
wherein the elongated body of light transmissive material
takes the form of a fiber optic cylinder 145. The light
entrance and light exit means are defined by flat end surfaces
146 and 147 respectively normal to the longitudinal axis
designated A''' -A'''.


The same plurality of lasers 110 and 114 described
in the previous multiple pulsed laser embodiments may be
used in the system of FIG. 8 and also the same trigger generating
means 125. However, again a different delay line 150 is
provided to define appropriate time intervals between successive
firings of the lasers to result in the successively received
input light pulses all exiting from the far end of the fiber
optic cylinder 145 at substantially the same time.


In FIG. 8, there is given the light path for the
laser 110 at 148 which is the longest path and again simulates
a sawtooth. The shortest path length, in turn, is for the
laser 114 and is indicated at 149 wherein there is only
a single internal reflection.


The various light paths for the lasers in between
will successively decrease between the limits of the light
path for the laser 110 and the light path for the laser

- 24 -                                    0030671

114.

        As in the case of the other embodiments, a given time interval is introduced during the firing of the successive lasers, the same again being accomplished by a delay line indicated at 150.  For example, the length of time it would take light to travel a path equal to the difference between the path lengths 148 and 149 would correspond to the time interval between the firing of the laser 110 and the firing of the laser 114.  As a result, and as described heretofore, all of the pulses will exit from the fiber optic cylinder at the exit means 147 at one point in time.


        FIG. 9 is a time diagram illustrating the foregoing not only for FIG. 8 but for the other embodiments as well.

Thus, if the capital letters A, B, C, D, and E represent the respective pulses from the lasers 110 and 114, it will be noted that the laser 110 is first triggered from a basic generated trigger signal 151 after a time T1.  The next

laser is triggered after a time T2, the next after a time T3, the next after a time T4 and the last laser after a time T5.  After a total lapse of time T6, the output pulse will appear at the end of the particular light emissive body whether it be that shown in FIG. 4, FIG. 6 or FIG.

8.


        Since the light pulse A travels the longest path in each instance, it will not arrive at the position of the output pulse 152 and FIG. 9 until a total time interval T6 has passed. A dotted line showing of the pulse A is represented in FIG. 6 in alignment with the output pulse 152.

The path length for the laser pulse B is less than that for A, but since it was generated at a later period in time because of the delay line, it will again arrive in coincidence with the output pulse 152 as also indicated by the dotted line pulse. Similar dotted line positions are shown for the laser pulses C, D and E.

All the dotted line pulses shown will add up to the giant output pulse 152 described in FIG. 9.

From all of the foregoing, it will thus be evident that the present invention has provided a very effective method and apparatus for converting steady or sequential pulses of light into output light comprised of periodic high amplitude pulses. In the multiple pulse laser embodiments of the invention, the output pulses from individual lasers can be bunched together to occur and to be utilized at a single point in time by a single light transmissive body or medium.

IN THE CLAIMS:

1.    A method of bunching light into output light comprised of periodic high amplitude pulses, including the steps of:

(a)  Producing light at sequential moments in time;

(b)  sequentially passing said produced light into a solid body of light transmissive material at an angle of entry therewith which varies with each of said moments in time;

(c)   internally reflecting said light in said solid body such that the initially received light in said body follows a first path of a first given length before it emerges from said body, and subsequently received light in said body follows paths of length which varies from said first path inversely with the sequence of receipt thereof by said solid body, whereby said sequentially generated light emerges from said body substantially simultaneously in a single of said high amplitude pulses.

2.    A method according to Claim 1 further characterized in that said light is a steady state beam, and further comprising moving said steady state light beam through a given acute angle at a given frequency, whereby when said beam starts its movement through said acute angle it follows said first path, and whereby when said beam has completed its movement through said acute angle it follows a second path of a second given length different from said first given length before it emerges from said body, and further comprising adjusting the value of said given frequency such that the time for the beam to move through said given acute angle is substantially equal to the time it takes light to travel a path length in said body equal to the difference in said first and second given lengths.

3. The method of Claim 2, including the step of providing said body in an elongated shape having a longitudinal axis and a given number of side surfaces parallel to and surrounding said axis to effect internal reflections of the light beam so that when the beam is directed into one side surface, it follows a helical-like path about the longitudinal axis of the body from one end of the body to the other, whereby a path length substantially longer than the length, width or height dimension of the prism shape can be realized.

4. The method of Claim 3, in which said steady light is generated by a laser, said method including the further step of collimating the beam of light from said laser prior to moving the light beam through said given acute angle to thereby minimize the spread of the light beam when traveling through said body.

5. An apparatus for converting steady light into output light comprised of periodic high amplitude pulses, including in combination:

(a) a steady light source providing a light beam;

(b) electro-optical means for receiving and moving said light beams through a given acute angle at a given frequency; and,

(c) a solid body of light transmissive material, said body having a light entrance area and a light exit area positioned such that light entering said entrance area along an initial axis will exit from said light exit area

after traveling a first given path length in said body, and light entering said entrance area along a new axis different from said initial axis by said given acute angle, will exit from said light exit area after traveling a second given path length in said body different from said first given length, the time for light to travel a path length equal to the difference between said first and second path lengths being equal to the time for said beam to pass through said given acute angle.

6.    An apparatus according to Claim 5, in which said body is elongated with a longitudinal axis and has side surfaces from which internal light reflections can take place, said entrance area being on a side surface at one end of said body and said exit area being on a side surface at the opposite end of said body, the number of said side surfaces being such that said light beam is internally reflected therefrom and will travel in the manner of a helical path about said axis, the pitch of said helical path increasing as the angle of the beam with its initial axis approaches said given acute angle.

7.    An apparatus according to Claim 6, in which said steady light source comprises a laser and means for collimating the light beam from said laser to minimize the spreading of the light beam while traveling in said body.

8.    An apparatus according to Claim 5 further characterized in that said steady state light source is a continuous wave laser for providing a beam of constant amplitude coherent light, and further comprising a collimating lens positioned in front of said laser to collimate said beam along an initial axis;

and further characterized in that said electro-optical means is an electro-optical crystal intercepting said beam after collimation and having the property of moving the beam through said given acute angle from an initial beam axis to a new beam axis, and thence back to its initial axis in response to a given electrical waveform applied to said crystal at a given frequency to define a given time increment for the beam to move from said initial axis to said new axis.

9.   An apparatus according to Claim 8 in which said body is glass having a longitudinal axis and a cross sectional rectangular shape in which said sides comprise four polished surfaces lying in planes at 90° to each and parallel to said axis, whereby the light circuit followed by said beam from said light entrance area to said light exit area appears essentially as a square helix when viewed along said longitudinal axis of said body, as opposed to a circular helix, and said light entrance and exit areas are defined by 45° prisms integrally formed into portions of the sides of said body, the exit area prism being substantially larger than the entrance area prism to accomodate spreading of the light beam in its travel through said body.

10.   An apparatus according to Claim 8 further comprising means for applying an assymmetrical waveform to said crystal whereby said waveform constitutes an assymmetrical sawtooth shape such that the movement of said beam from its new axis back to its original axis is at a substantially higher rate than movement of said beam from its initial axis through said given acute angle to its new axis whereby substantially more than one half of the continuous wave light provided during each period defined by said frequency is converted to said high amplitude pulses.

11. A multiple pulse laser assembly including:

(a) a plurality of individual pulse lasers;

(b) a body of light transmissive material positioned to receive the output pulses from said lasers and direct the pulses by internal reflections along individual paths of different lengths; and

(c) trigger means for successively triggering the operation of said lasers in a time sequence such that pulses exit from said body at the ends of said paths substantially simultaneously.

12. A multiple pulse laser assembly according to Claim 11 further characterized in that said body of light transmissive material is elongated and has light entrance means and light exit means, and said pulse lasers are positioned to direct their generated output pulses into said light entrance means at angles different from each other so that the light paths between said light entrance means and said light exit means travelled by the output pulses from the lasers are of unequal lengths;

and further comprising delay line means connected to said trigger means for carrying a trigger signal therefrom and having tap off points to said pulse lasers so that said trigger signal travels down said delay line means to trigger successively said pulse lasers at predetermined timed intervals

0030671

such that the output pulses from said lasers exit from said light exit means in said body substantially simultaneously.

13. An assembly according to Claim 12, in which said elongated body has a plurality of polished side surfaces defining a hexagon in cross section, the end portion of said body in one side surface having a triangular cut-out defining said light entrance means, light pulses entering said light entrance means being internally reflected from said side surfaces such that said light paths of different lengths follow generally helical paths of different pitches determined by said angles.

14. An assembly according to Claim 13 in which a triangular cut-out defines said light exit means at the end of said elongated body opposite said light entrance means.

15. An assembly according to Claim 12, in which said plurality of lasers are positioned to direct their output pulses into said separate light entrance means respectively to effect internal reflections from said opposite side surfaces following generally sawtoothed-shaped paths, the spacing of said cut-outs and the angles of entry of said output laser pulses being such that no two paths follow a like direction in said body, said light exit means comprising a single continuous curved cut-out defining a lens intercepting the ends of said paths and directing exiting light along in parallel directions.

16. An assembly according to Claim 12, in which said elongated body comprises a fiber optic cylinder, said light entrance means and said light exit means being defined by flat opposite end surfaces normal to the axis of said cylinder, different angles of the entering light pulses being defined with respect to the axis of said cylinder so that said different lengths of light paths result from internal reflections at different angles in said cylinder.

1/5

0030671

FIG.1

FIG.2

FIG. 3

0030671

FIG.4

FIG.5

0030671

FIG. 6

FIG. 7

0030671

FIG. 8

FIG. 9

European Patent
Office

**EUROPEAN SEARCH REPORT**

Application number

EP 80 10 7503.7

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate, of relevant passages | Relevant to claim | |
| D,A | <u>US - A - 3 459 466</u> (J.A. GIORDMAINE) <br> * whole document * <br> -- | | G 02 B 27/00 <br><br> H 01 S 3/00 |
| A | IEEE JOURNAL OF QUANTUM ELECTRONICS, Vol. QE-15, No. 5, May 1979 J.J. EWING et al. "Optical Pulse Compressor Systems for Laser Fusion" pages 368 to 379 <br> * fig. 1 * <br> -- | | |
| A | <u>DE - B - 1 266 537</u> (OPTISCHE WERKE G. RODENSTOCK) <br> * whole document * <br> -- | | G 02 B 27/00 <br><br> H 01 S 3/00 |
| A | <u>US - A - 4 090 779</u> (J.T. McNANEY) <br> * whole document * <br> ---- | | |

**TECHNICAL FIELDS SEARCHED** (Int. Cl.³)

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search <br> Berlin | Date of completion of the search <br> 18-03-1981 | Examiner <br> FUCHS | |